# EUROPEAN PATENT APPLICATION

(11) **EP 4 682 518 A1**
(43) Date of publication of application: **21.01.2026**
(21) Application number: 25189883.9
(22) Date of filing: 16.07.2025
(51) Int. Cl.: G01N 23/04, G01N 23/083, G01N 23/18

(54) **X-RAY INSPECTION APPARATUS**

(30) Priority: 19.07.2024 JP 2024116165
(71) Applicant: Ishida Co., Ltd., Kyoto-shi Kyoto 606-8392 (JP)
(72) Inventor: HIROSE, Osamu, Ritto-shi, Shiga, 520-3026 (JP); YURUGI, Futoshi, Ritto-shi, Shiga, 520-3026 (JP); TOMINAGA, Kota, Ritto-shi, Shiga, 520-3026 (JP)
(74) Representative: Global IP Europe Patentanwaltskanzlei

(57) **Abstract**

To provide an X-ray inspection apparatus (1) that can simplify a configuration of a control unit (10, 20) configured to inspect whether an article (G) is defective or not even when an X-ray inspection image is generated based on detection by an article detection unit (9).

An X-ray inspection apparatus (1) includes a conveying unit (5), an article detection unit (9) configured to detect an article (G), an X-ray irradiation unit (6), an X-ray detection unit (7), a first control unit (10) configured to generate first data (D1) used to generate an X-ray inspection image based on a detection result of X-rays detected by the X-ray detection unit (7), and a second control unit (20) configured to determine whether the article (G) is defective or not based on the X-ray inspection image. The first control unit (10) acquires, in addition to the first data (D1), second data (D2) that is information related to a detection result by the article detection unit (9) and generates inspection datum (D3) including a first region (R1) in which the first data (D1) is stored and a second region (R2) in which the second data (D2) is stored. The second control unit (20) generates the X-ray inspection image based on the inspection data (D3) generated by the first control unit (10).

## Description

### Technical Field

An aspect of the present invention relates to an X-ray inspection apparatus.

### Background Art

A known X-ray inspection apparatus is configured to irradiate an article conveyed to an inspection region by a conveying unit with X-rays, detect a transmission state of the X-rays by an X-ray detection unit, and determine whether foreign matter is mixed in the article or whether a chip/crack has occurred in the article. Such an X-ray inspection apparatus includes a control unit (second control unit) configured to generate an X-ray inspection image based on a detection result of X-rays detected by the X-ray detection unit and inspect whether the article is defective or not. Here, in the conventional X-ray inspection apparatus, when the degree of detection of X-rays detected by the X-ray detection unit decreases, the control unit determines that the article to be inspected is passing through the inspection region, and starts generating an X-ray inspection image. However, only with information on the degree of detection of X-rays, it may be difficult to determine that, for example, an article with a high degree of detection (low absorption of X-rays) is passing through the inspection region.

In order to solve such a problem, an X-ray inspection apparatus described, for example, in JP 2009-264837 A, is provided with an article detection unit such as a photosensor, and determines that an article to be inspected is passing through an inspection region based on a detection result by the article detection unit. In the X-ray inspection apparatus described in JP 2009-264837 A, a control unit generates an X-ray inspection image, based on a detection result transmitted from an X-ray detection unit, when it is determined that the article is passing through the inspection region.

### Citation List

### Patent Literature

Patent Document 1: JP 2009-264837 A

### Summary of Invention

### Technical Problem

However, the control unit of the conventional X-ray inspection apparatus needs to execute a plurality of processes such as a process of receiving both the detection result of the article transmitted from the article detection unit and the detection result of X-rays (degree of detection of X-rays) that can be obtained from the X-ray detection unit, a process of associating the article detection timing with the detection result of X-rays, a process of generating an X-ray inspection image from data generated based on such an association process, and a process of inspecting whether the article is defective or not based on the X-ray inspection image. Therefore, the configuration of the control unit that inspects whether the article is defective or not becomes complicated.

Therefore, an object of an aspect of the present disclosure is to provide an X-ray inspection apparatus that can simplify a configuration of a control unit configured to inspect whether an article is defective or not even when an X-ray inspection image is generated based on detection by an article detection unit.

### Solution to Problem

(1) An X-ray inspection apparatus according to an aspect of the present disclosure includes: a conveying unit configured to convey an article; an article detection unit configured to detect the article conveyed by the conveying unit; an X-ray irradiation unit configured to irradiate the article with X-rays; an X-ray detection unit configured to detect the X-rays; a first control unit configured to generate first data used to generate an X-ray inspection image based on a detection result of the X-rays detected by the X-ray detection unit; and a second control unit configured to control the conveying unit and the X-ray irradiation unit and determine whether the article is defective or not based on the X-ray inspection image. The first control unit acquires, in addition to the first data, second data that is information related to a detection result by the article detection unit, and generates inspection data including a first region in which the first data is stored and a second region in which the second data is stored. The second control unit generates the X-ray inspection image based on the inspection data generated by the first control unit.
   In the X-ray inspection apparatus having this configuration, the first control unit that acquires the first data used to generate the X-ray inspection image based on the detection result of the X-rays detected by the X-ray detection unit receives, in addition to the first data, the second data that is information on the detection result by the article detection unit. **In** addition, the first control unit generates the inspection data in which the detection timing of the article is associated with the detection result of the X-rays acquired by the X-ray detection unit. Accordingly, the second control unit may perform a process of generating the X-ray inspection image based on the inspection data and a process of determining whether the article is defective or not based on the X-ray inspection image, and even when the X-ray inspection image is generated based on detection by the article detection unit, the configuration of the control unit (second control unit) that inspects whether the article is defective or not can be simplified.
(2) **In** the X-ray inspection apparatus according to (1) described above, the first control unit may acquire the second data by receiving the second data transmitted from the article detection unit. With this configuration, the first control unit can easily acquire the second data.
(3) **In** the X-ray inspection apparatus according to (1) or (2) described above, the second control unit may generate the X-ray inspection image based on the first data when the second data of the inspection data transmitted from the first control unit is information indicating that there is a detection by the article detection unit. With this configuration, the X-ray inspection image having the minimum amount of data can be generated.
(4) In the X-ray inspection apparatus according to any one of (1) to (3) described above, the article detection unit may be configured to be able to detect presence of the article in each of a plurality of regions divided in a width direction orthogonal to a conveying direction of the article. With this configuration, for example, even when a plurality of articles are conveyed while being arranged in the width direction, the conveyance state of the articles is accurately detected, and an image suitable for performing inspection can be generated.

### Advantageous Effects of Invention

According to an aspect of the present disclosure, even when an X-ray inspection image is generated based on detection by the article detection unit, the configuration of the control unit configured to inspect whether an article is defective or not can be simplified.

### Brief Description of Drawings

FIG. 1 is a configuration diagram illustrating an X-ray inspection apparatus according to an embodiment.
FIG. 2 is a schematic configuration diagram of the interior of a shield box illustrated in FIG. 1.
FIG. 3 is a block diagram illustrating the X-ray inspection apparatus according to an embodiment.
FIG. 4 is a block diagram illustrating a functional configuration of a second control unit in FIG. 2.
FIG. 5 is a diagram illustrating an example of a configuration of data output from a first control unit to the second control unit.
FIG. 6 is a diagram schematically illustrating a configuration of inspection data generated by the first control unit according to a modified example and how the inspection data is acquired.
FIGS. 7(A) to 7(C) are examples of an X-ray inspection image generated by the X-ray inspection apparatus according to the modified example.

### Description of Embodiments

Hereinafter, an X-ray inspection apparatus according to an embodiment will be described below with reference to the drawings. Note that, in descriptions of the drawings, the same elements are denoted by the same reference signs, and redundant descriptions are omitted.

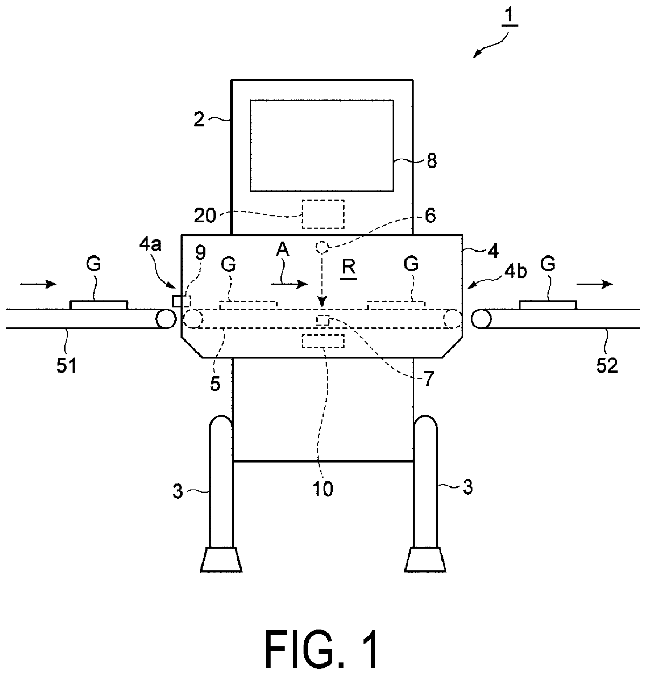

As illustrated in FIG. 1, an X-ray inspection apparatus 1 includes a apparatus main body 2, support legs 3, a shield box 4, a conveying unit 5, an X-ray irradiation unit 6, an X-ray detection unit 7, an article detection unit 9, a display operation unit 8, a first control unit 10, and a second control unit 20. The X-ray inspection apparatus 1 generates an X-ray transmission image of an article G while conveying the article G, and inspects the article G based on the X-ray transmission image. The article G before inspection is conveyed into the X-ray inspection apparatus 1 by an inbound conveyor 51. The article G after inspection is conveyed out from the X-ray inspection apparatus 1 by an outbound conveyor 52.

The apparatus main body 2 accommodates the second control unit 20. The support legs 3 support the apparatus main body 2. The shield box 4 is provided at the apparatus main body 2. The shield box 4 is a housing for preventing leakage of X-rays (electromagnetic waves) to the outside. Inside the shield box 4, an inspection chamber R is provided in which the inspection of the article G by X-rays is performed. An inbound port 4a and an outbound port 4b are formed in the shield box 4. The article G before the inspection is conveyed into the inspection chamber R from the inbound conveyor 51 through the inbound port 4a. The article G after the inspection is conveyed from the inspection chamber R to the outbound conveyor 52 via the outbound port 4b.

The conveying unit 5 is a member for conveying the article G and is arranged to pass through the center of the shield box 4. The conveying unit 5 conveys the article G along a conveying direction A from the inbound port 4a to the outbound port 4b via the inspection chamber R. The speed (conveyance speed) at which the article G is conveyed by the conveying unit 5 is set, for example, by the second control unit 20. The conveying unit 5 is, for example, a belt conveyor that is stretched between the inbound port 4a and the outbound port 4b. The conveying unit 5 may protrude outward from the inbound port 4a and the outbound port 4b.

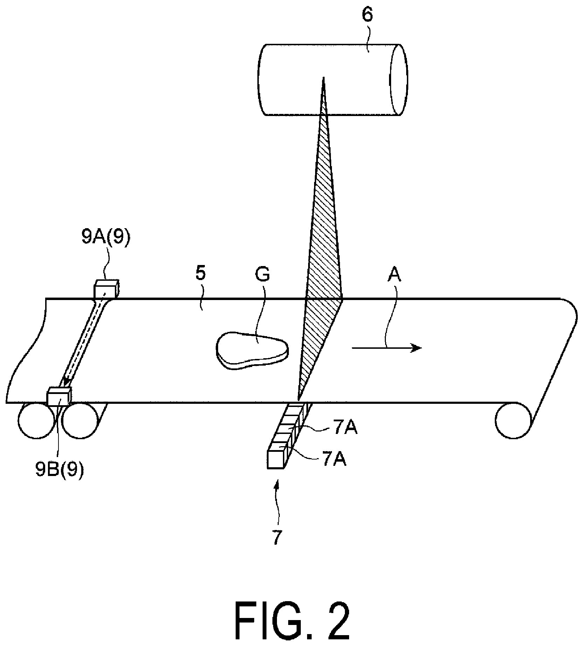

As illustrated in FIGS. 1 and 2, the X-ray irradiation unit 6 is an electromagnetic wave irradiation unit arranged in the shield box 4, and irradiates the article G conveyed by the conveying unit 5 with X-rays. The X-rays include X-rays of various energy regions from low energy (long wavelength) to high energy (short wavelength). Thus, the X-ray irradiation unit 6 irradiates the article G conveyed to the conveying unit 5 with X-rays of a plurality of energy regions. Note that the above-described "low" and "high" in the low energy and high energy represent "low" and "high" relatively among the plurality of energy regions irradiated from the X-ray irradiation unit 6, and do not represent a specific range. The power (in particular, current) supplied to the X-ray irradiation unit 6 can be changed manually or automatically. By changing the power, the output of the X-ray irradiated to the article G can be changed. Thus, the X-ray having an appropriate intensity for the article G can be irradiated.

The X-ray detection unit 7 detects electromagnetic waves. The X-ray detection unit 7 is disposed in the shield box 4 at a position facing the X-ray irradiation unit 6 in an up-down direction. The conveying unit 5 is located between the X-ray detection unit 7 and the X-ray irradiation unit 6 in the vertical direction. The X-ray detection unit 7 includes a plurality of detecting elements 7A arranged at least in a width direction orthogonal to (intersecting with) the conveying direction A of the conveying unit 5.

The X-ray detection unit 7 outputs, to the first control unit 10, data (hereinafter, also referred to as "detection value") corresponding to the amount of X-rays detected by each of the detecting elements 7A. The X-ray detection unit 7 may be a direct conversion type detection unit that can detect X-rays by a photon counting method. In this case, in each detecting element 7A, for example, an electron-hole pair is generated when an X-ray photon arrives. A counting process of photon (photon counting) is performed based on the energy (photon energy) obtained at this time. The counting process is performed, for example, by the first control unit 10.

The detecting elements 7A of the X-ray detection unit 7 may be, for example, a sensor (multi-energy sensor) configured to detect X-rays in each of a plurality of energy regions transmitted through the article G. For example, each of the detecting elements 7A of the X-ray detection unit 7 may discriminate the photon energy of X-rays detected based on an arbitrary threshold value into two or more energy regions. In this case, the X-ray detection unit 7 can perform photon counting in each of the energy regions. Any threshold value is, for example, one or more values (unit: keV) set, for example, by the second control unit 20. Any threshold value may be set, for example, by the method described in JP 2023-132587 A, or by using a brightness level.

The X-ray detection unit 7 may be provided with, for example, the detecting elements 7A that detect X-rays in each of the plurality of energy regions transmitted through the article G. For example, the detecting element 7A dedicated to a low-energy band, which detects X-rays in the low-energy band irradiated by the X-ray irradiation unit 6, and the detecting element 7A dedicated to a high-energy band, which detects X-rays in the high-energy band, may be provided. The X-ray detection unit 7 may be a time delay integration sensor (TDI sensor) including the plurality of detecting elements 7A of the detecting elements 7A that are arranged in both the conveying direction A of the conveying unit 5 and the width direction orthogonal to the conveying direction A.

The article detection unit 9 detects the article G conveyed by the conveying unit 5. The article detection unit 9 of the present embodiment is a photoelectric sensor. A light projecting unit 9A and a light receiving unit 9B that constitute the photoelectric sensor are arranged to face each other in the width direction of the conveying unit 5. The light receiving unit 9B detects an amount of light received of the light projected from the light projecting unit 9A toward the light receiving unit 9B, and transmits the amount of light received to the first control unit 10. Instead of the photoelectric sensor, the article detection unit 9 may employ an ultrasonic sensor, a capacitive proximity sensor, a laser displacement sensor, an imaging apparatus such as a camera, or the like. The article detection unit 9 of the present embodiment is disposed on the upstream side of the position in which the X-ray irradiation unit 6 and the X-ray detection unit 7 are disposed in the conveying direction A of the conveying unit 5. More specifically, the article detection unit 9 is disposed near the inbound port 4a of the shield box 4 (for example, slightly on an inner side of the inbound port 4a of the shield box 4).

The first control unit 10 generates first data D1 for generating an X-ray inspection image based on a detection result of X-rays detected by the X-ray detection unit 7. The first data D1 generated by the first control unit 10 may be raw data detected by the X-ray detection unit 7 or may be processed data obtained by processing the raw data by the first control unit 10. For example, when the X-ray detection unit 7 is a line sensor arranged in one direction, the first data D1 may be generated based on a plurality of detection values (raw data) respectively detected by the plurality of detecting elements 7A arranged in a row. For example, when the X-ray detection unit 7 is a TDI sensor, the first data D1 may be generated based on the detection values (raw data) of each row of the detecting elements 7A arranged in the conveying direction A, or the first data D1 may be generated based on an integrated value (processed data) of the detection values of each row of the detecting elements 7A arranged in the conveying direction A.

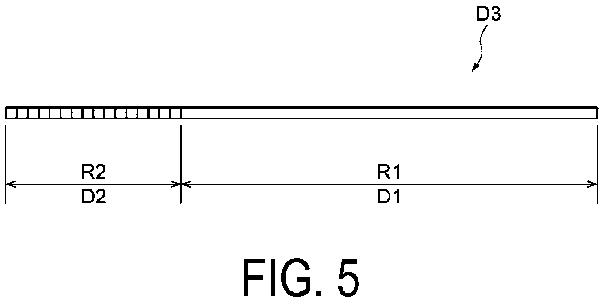

The first control unit 10 acquires second data D2 that is information on the detection result by the article detection unit 9. The first control unit 10 receives the second data D2 transmitted from the article detection unit 9, thereby acquiring the second data D2. For example, the second data D2 is information "1" output when the article G conveyed by the conveying unit 5 is detected by the article detection unit 9, and is information "0" output when the article G is not detected by the article detection unit 9. The first control unit 10 generates inspection data D3 including a data region (first region) R1 in which the first data D1 is stored and a header region (second region) R2 in which the second data D2 is stored (see FIG. 5).

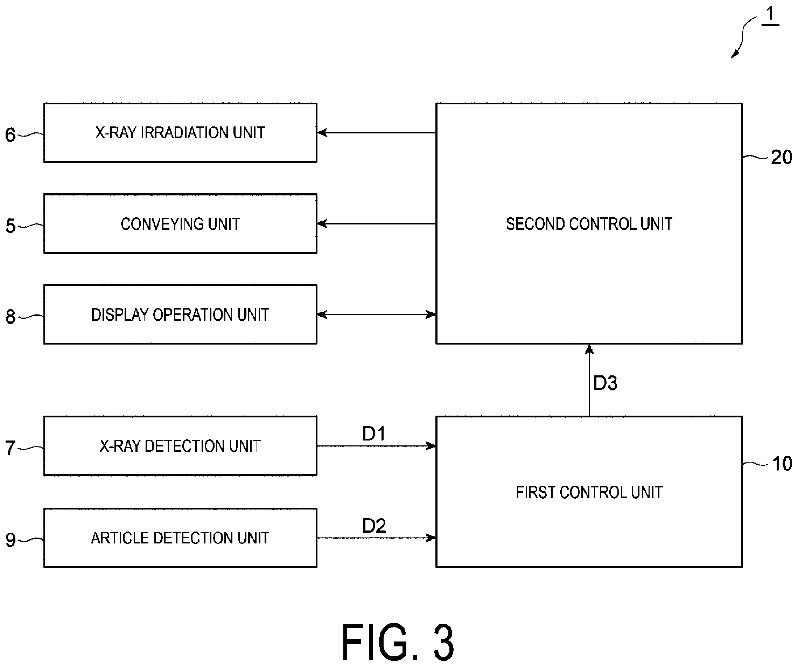

When the article G is detected by the article detection unit 9, the first control unit 10 calculates the time (adjustment time) from the detection position of the article detection unit 9 to the X-ray irradiation region of the X-ray irradiation unit 6 from the conveyance speed of the conveying unit 5. After receiving the detection result by the article detection unit 9 as the second data D2, the first control unit 10 sets the detection values received from the X-ray detection unit 7 when the adjustment time has elapsed as the first data D1 and associates the detection values with the second data D2. As illustrated in FIG. 3, the first control unit 10 generates the inspection data D3 by associating the first data D1 with the second data D2. The first control unit 10 transmits the inspection data D3 generated in this way to the second control unit 20.

The first control unit 10 includes a central processing unit (CPU), a read only memory (ROM), a random access memory (RAM), a field programmable gate array (FPGA), or the like. The first control unit 10 may be unitized together with the X-ray detection unit 7 within the same housing. The X-ray detection unit 7 and the first control unit 10 may be disposed on the same substrate.

As illustrated in FIG. 1, the display operation unit 8 is provided in the apparatus main body 2. The display operation unit 8 displays a variety of information and receives input operations of a variety of conditions from the outside. The display operation unit 8 is, for example, a liquid crystal display and displays an operation screen as a touch panel. In this case, the operator can input a variety of conditions via the display operation unit 8. For example, the operator can set the conveyance speed of the conveying unit 5, the power (at least one of current and voltage) supplied to the X-ray irradiation unit 6, or the like via the display operation unit 8. The input operation received by the display operation unit 8 is output to the conveying unit 5, the X-ray detection unit 7, the second control unit 20, or the like.

The second control unit 20 is disposed inside the apparatus main body 2. The second control unit 20 controls the operation of each component of the X-ray inspection apparatus 1. For example, the second control unit 20 controls the conveying unit 5 and the X-ray irradiation unit 6 and determines whether the article G is defective or not based on the generated X-ray inspection image. The second control unit 20 includes a central processing unit (CPU), a read only memory (ROM), a random access memory (RAM), or the like. The ROM stores a program for controlling the X-ray inspection apparatus 1, an operation mode of the X-ray inspection apparatus 1, or the like.

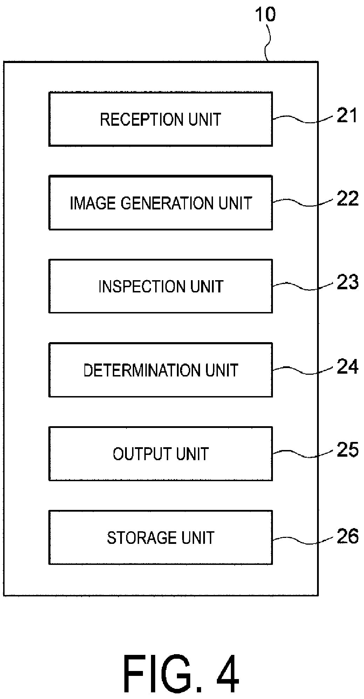

As illustrated in FIG. 4, the second control unit 20 includes a reception unit 21, an image generation unit 22, an inspection unit 23, a determination unit 24, an output unit 25, and a storage unit 26.

The reception unit 21 receives an input operation received by the display operation unit 8. The reception unit 21 receives, for example, the conveyance speed of the conveying unit 5, or the like set via the display operation unit 8. Also, the reception unit 21 receives the inspection data D3 output from the first control unit 10. The reception unit 21 transmits the inspection data D3 to the image generation unit 22.

The image generation unit 22 is mainly composed of, for example, a graphics processing unit (GPU), and generates an image based on the first data D1 included in the inspection data D3. For example, the image generation unit 22 develops the first data D1 included in the inspection data D3 into a two-dimensional image on a memory. The memory in which the two-dimensional image is developed is, for example, a memory included in the GPU, but is not limited thereto. For example, the image generation unit 22 reads the detection results output from at least a part of the plurality of detecting elements 7A included in the X-ray detection unit 7 at a predetermined read interval, and generates X-ray inspection images used for inspecting the article G. The image generation unit 22 may generate X-ray inspection images by generating a plurality of time-delay integral images generated in the same manner. For example, the image generation unit 22 may generate X-ray inspection images by generating a plurality of transmission images respectively for the plurality of energy regions and generating one or a plurality of difference images from the plurality of transmission images.

When the second data D2 of the inspection data D3 transmitted from the first control unit 10 is information indicating that there is a detection by the article detection unit 9, that is, when the header region R2 includes "1" indicating that there is a detection by the article detection unit 9, the image generation unit 22 generates X-ray inspection images based on the first data D1 included in the data region R1 stored in association with the header region R2. In other words, when the image generation unit 22 receives the inspection data D3 from the first control unit 10 but the header region R2 of the received inspection data D3 does not include "1" that is information indicating that there is a detection by the article detection unit 9, the inspection data D3 is not used for forming an image or is discarded.

The image generation unit 22 may use, for example, an image processing algorithm or a program automatically set by machine learning. The image processing algorithm is composed of one image processing filter or a combination of a plurality of image processing filters. At least one or more of a plurality of image processing algorithms can be automatically generated from the plurality of image processing filters based on the specifications, inspection conditions, or the like of the X-ray inspection apparatus 1 by employing genetic algorithms (GA), which are methods applying the mechanism of heredity and evolution in the biological world. At least a part of the plurality of image processing algorithms can also be appropriately set by the operator via the display operation unit 8. The program automatically set by machine learning is a predictive model (learned model) generated by machine learning, and an inference program in which parameters (learned parameters) obtained as a result of machine learning are incorporated. Examples of machine learning used in the learned model include neural networks, support vector machines, genetic algorithms or the like.

The inspection unit 23 inspects the article G based on the image generated by the image generation unit 22. For example, the inspection unit 23 inspects the article G by using the plurality of transmission images, the difference images, or the like. The inspection unit 23 may inspect the article G based on both the difference image and the transmission image. During the generation of the difference image by the image generation unit 22, the inspection of the article G based on the transmission image or the like may be performed. The inspection unit 23, for example, inspects the article G for the presence of foreign matter, the presence of a chip/crack, or the like, but is not limited to this. In cases such as where the article G is wrapped in a sheet-like packaging material, the inspection unit 23 can also inspect a break of the packaging material, a seal failure of the packaging material (seal bite), or the like. In cases such as where the article G is accommodated in a package, the inspection unit 23 can perform foreign matter confirmation inspection, a missing part confirmation inspection, a housing number confirmation inspection, a cavity confirmation inspection, or the like, in the package. The inspection unit 23 transmits the inspection result of the article G to the determination unit 24 and the storage unit 26.

The determination unit 24 determines whether the article G is defective or not based on the inspection result received from the inspection unit 23. For example, the determination unit 24 determines the presence of foreign matter in the article G, the presence of a chip/crack of the article G, or the like. The determination unit 24 transmits the determination result to the output unit 25 and the storage unit 26.

The output unit 25 outputs the determination result by the determination unit 24 to at least one of a part other than the second control unit 20 in the X-ray inspection apparatus 1 and a apparatus different from the X-ray inspection apparatus 1. Accordingly, at least one of the X-ray inspection apparatus 1 and a apparatus different from the X-ray inspection apparatus 1 (e.g., a sorting apparatus located downstream from the X-ray inspection apparatus 1) can perform an operation when the article G is defective. Other examples of the above-mentioned apparatuses different from the X-ray inspection apparatus 1 include, for example, the inbound conveyor 51, the outbound conveyor 52, and a notification apparatus.

The storage unit 26 stores signals, data, or the like generated by the second control unit 20. For example, the storage unit 26 stores the detection results transmitted from the reception unit 21, the image data transmitted from the image generation unit 22, the data related to the inspection results transmitted from the inspection unit 23, and the data related to the determination results transmitted from the determination unit 24.

The actions and effects of the X-ray inspection apparatus 1 according to the embodiment described above will be described. Here, in the conventional X-ray inspection apparatus including the article detection unit 9, the control unit generates an X-ray inspection image, based on the detection result transmitted from the X-ray detection unit, when it is determined that the article is passing through the inspection region. However, the control unit of the conventional X-ray inspection apparatus needs to execute a plurality of processes such as a process of receiving both the detection result of the article transmitted from the article detection unit and the detection result of X-rays (degree of detection of X-rays) that can be obtained from the X-ray detection unit, a process of associating the article detection timing with the detection result of X-rays, a process of generating an X-ray inspection image from data generated based on such an association process, and a process of inspecting whether the article is defective or not based on the X-ray inspection image. Therefore, the configuration of the control unit that inspects whether the article is defective or not becomes complicated.

In contrast to such a conventional X-ray inspection apparatus, in the X-ray inspection apparatus 1 according to the embodiment described above, the first control unit 10 that acquires the first data D1 for generating an X-ray inspection image based on the detection result of X-rays detected by the X-ray detection unit 7 receives, in addition to the first data D1, the second data D2 that is information on the detection result by the article detection unit 9. Further, the first control unit 10 generates the inspection data D3 in which the detection timing of the article G and the detection result of X-rays acquired by the X-ray detection unit 7 are associated with each other. Accordingly, the second control unit 20 may perform a process of generating the X-ray inspection image based on the inspection data D3 and a process of determining whether the article is defective or not based on the X-ray inspection image, and even when the X-ray inspection image is generated based on detection by the article detection unit 9, the configuration of the second control unit 20 that inspects whether the article G is defective or not can be simplified.

In addition, in the conventional X-ray inspection apparatus, the detection result (second data D2) of the article G is transmitted from the article detection unit 9 to the second control unit 20, and the detection values (first data D1) by the detecting elements 7A are transmitted to the second control unit 20 via the first control unit 10. Therefore, unlike the X-ray inspection apparatus 1 according to the embodiment described above, the first data D1 and the second data D2 are associated with each other not by the first control unit 10 but by the second control unit 20. In this case, in order to synchronize the detection result of X-rays and the detection result of the article, it is necessary to consider the communication delay time between the first control unit 10 and the second control unit 20 in addition to the time (adjustment time) from the detection position by the article detection unit 9 to the X-ray irradiation region by the X-ray irradiation unit 6. Therefore, it is difficult to synchronize the detection result of X-rays and the detection result of the article in the second control unit 20. If the timing is not synchronized, an image suitable for performing inspection may not be obtained.

In this regard, in the X-ray inspection apparatus 1 of the embodiment described above, the first control unit 10 acquires both the first data D1 and the second data D2. Additionally, when associating the first data D1 with the second data D2, the first control unit 10 only needs to consider the aforementioned adjustment time (does not need to consider the communication delay time). Therefore, it is easier to synchronize the detection result of X-rays and the detection result of the article than in the conventional X-ray inspection apparatus. As a result, an X-ray inspection image for performing inspection can be appropriately generated.

In the X-ray inspection apparatus 1 of the embodiment described above, the first control unit 10 acquires the second data D2 by receiving the second data D2 transmitted from the article detection unit 9. With this configuration, the first control unit 10 can easily acquire the second data D2.

In the X-ray inspection apparatus 1 according to the embodiment described above, when the second data D2 of the inspection data D3 transmitted from the first control unit 10 is information indicating that there is a detection by the article detection unit 9, the second control unit 20 generates an X-ray inspection image based on the first data D1. With this configuration, an X-ray inspection image having the minimum amount of data can be generated. In other words, when the article G to be inspected is acquired, it is possible to prevent formation of images not including the article G before and after the article G in the conveying direction A.

An embodiment has been described above. However, an aspect of the present disclosure is not limited to the embodiment described above. Various modifications can be made without departing from the scope of the disclosure.

### First Modified Example

In the X-ray inspection apparatus 1 according to the embodiment described above, an example is described in which the article detection unit 9 is configured to be able to detect the presence of the article G in the entire region in the width direction, in other words, the article detection unit 9 is able to detect the article G conveyed by the conveying unit 5 but is unable to determine in which part in the width direction the article G is conveyed, but is not limited to this. For example, the article detection unit 9 may be configured to be able to detect the presence of the article G in each of a plurality of regions divided in the width direction in the conveying unit 5. For example, in a case where the two article detection units 9, 9 configured to detect the articles G conveyed to a first region A1 and a second region A2 obtained by dividing a region in the width direction into two parts in the conveying unit 5 are provided, the presence of the articles G in the first region A1 and the second region A2 can be detected.

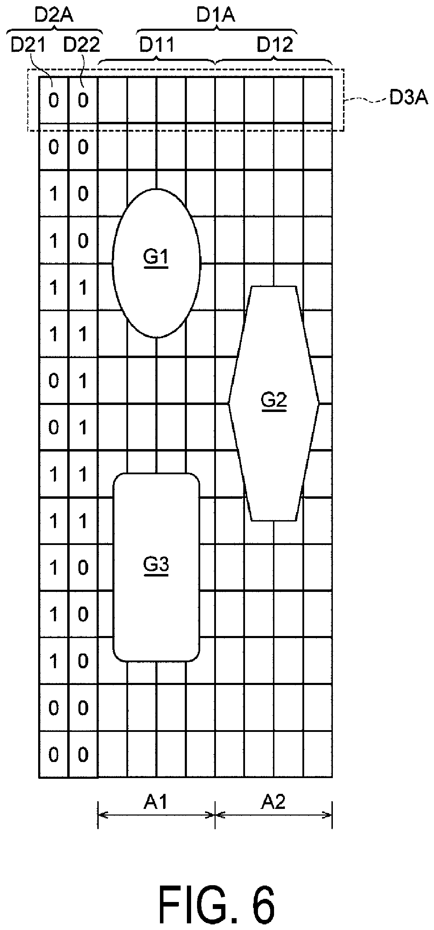

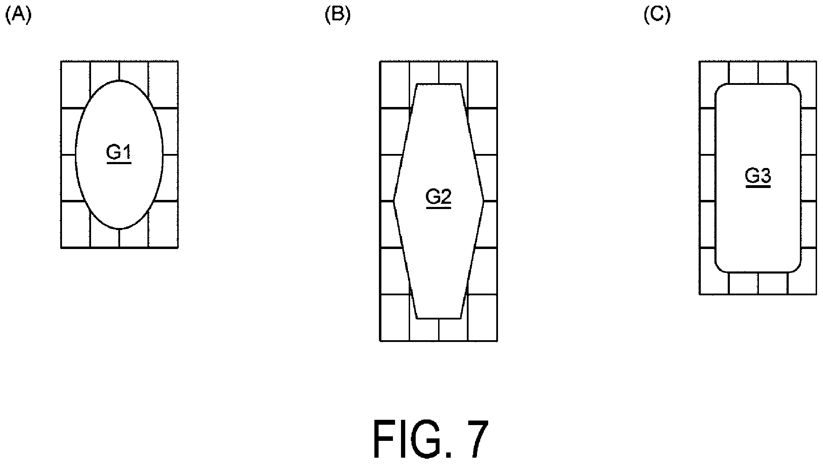

Here, in the X-ray inspection apparatus 1 according to a first modified example provided with the two article detection units 9, 9 configured to detect the articles G conveyed to the first region A1 and the second region A2 obtained by dividing a region in the width direction into two parts in the conveying unit 5, the explanation of inspection data D3A generated by the first control unit 10 and how X-ray inspection images are generated when three articles G1 to G3 are conveyed will be described mainly with reference to FIGS. 6 and 7.

FIG. 6 illustrates a configuration of the inspection data D3A generated by the first control unit 10 according to the first modified example. In FIG. 6, pieces of the inspection data D3A are arranged on a time-series basis from top to bottom, and are arranged in order from the oldest inspection data D3A. The squares of the first region A1 and the second region A2 indicate regions in which detection values D11, D12 that can be acquired from one detecting element 7A are stored. FIG. 6 schematically illustrates how the inspection data D3A is acquired. Specifically, this figure illustrates an image of data acquisition by the article detection unit 9 and the detecting elements 7A when the articles G1 to G3 are conveyed. Note that the number of detecting elements 7A and the size relationship between the detecting elements 7A and the articles G1 to G3 illustrated in FIGS. 6 and 7(A) to 7(C) do not necessarily match those of the X-ray inspection apparatus 1 according to the first modified example.

In the X-ray inspection apparatus 1 according to the first modified example, the first control unit 10 generates the inspection data D3A. Specifically, the first control unit 10 generates the inspection data D3A including the data region R1 in which first data D1A is stored and the header region R2 in which second data D2A is stored in the same manner as the inspection data D3 generated by the first control unit 10 of the X-ray inspection apparatus 1 in the embodiment described above.

The first data D1A includes the detection values D11 detected by the detecting elements 7A arranged in the first region A1 and the detection values D12 detected by the detecting elements 7A arranged in the second region A2. The second data D2A includes information D21 on the presence of the article G conveyed in the first region A1 and information D22 on the presence of the article G conveyed in the second region A2. The second data D2A is information "1" output when the article G conveyed by the conveying unit 5 is detected by the article detection unit 9, and is information "0" output when the article G is not detected by the article detection unit 9.

The second control unit 20 forms an X-ray inspection image based on the inspection data D3A as illustrated in FIG. 6. The second control unit 20 generates the X-ray inspection image for each of the divided regions (the first region A1 and the second region A2). Specifically, when generating the X-ray inspection image of the article G conveyed to the first region A1, the second control unit 20 generates the X-ray inspection image based on the detection values D11 detected by the detecting elements 7A arranged in the first region A1 included in the first data D1A when the information D21 on the presence of the article G conveyed to the first region A1 included in the second data D2A is "1". The X-ray inspection images generated in this manner of the article G1 and the article G3 are illustrated in FIGS. 7(A) and 7(C).

When generating the X-ray inspection image of the article G conveyed to the second region A2, the second control unit 20 generates the X-ray inspection image based on the detection values D12 detected by the detecting elements 7A arranged in the second region A2 included in the first data D1A when the information D22 on the presence of the article G conveyed to the second region A2 included in the second data D2A is "1". The X-ray inspection image generated in this manner of the article G2 is illustrated in FIG. 7(B).

In the configuration of the first modified example described above, even when a plurality of articles G are conveyed while being arranged in the width direction, the conveyance state of the articles G is accurately detected, and an X-ray inspection image suitable for performing inspection can be generated.

### Other Modified Examples

In the embodiment described above and the modified example described above, an example is described in which the article detection unit 9 is disposed on the upstream side of the position in which the X-ray irradiation unit 6 and the X-ray detection unit 7 are disposed in the conveying direction A of the conveying unit 5. Alternatively, the article detection unit 9 may be disposed at the same position in which the X-ray irradiation unit 6 and the X-ray detection unit 7 are disposed, or may be disposed on the downstream side of the position in which the X-ray irradiation unit 6 and the X-ray detection unit 7 are disposed. In this case also, the first control unit 10 may associate the second data D2 with the first data D1 to obtain the inspection data D3 in consideration of the time (adjustment time) from when the article G reaches the X-ray irradiation region by the X-ray irradiation unit 6 to when the article G is detected by the article detection unit 9.

In the embodiment described above and the modified example described above, an example is described in which the first control unit 10 associates the second data D2 of the detection result received from the article detection unit 9 with the first data D1 of the detection value received from the X-ray detection unit 7 in consideration of the time (adjustment time) until the article G is detected by the article detection unit 9. However, instead of the first control unit 10, the second control unit 20 may generate an X-ray inspection image based on the first data D1 and the second data D2 in consideration of the adjustment time and inspect the article G. Even in this case also, it is not necessary to consider the communication delay time or the like between the first control unit 10 and the second control unit 20.

In the embodiment described above, an example is described in which the region in which the second data D2 (D2A) is stored is stored as the header region R2 of the inspection data D3. Alternatively, the region in which the second data D2 (D2A) is stored may be stored in the region of the data region R1 as long as the region in which the second data D2 (D2A) is stored is associated with the region in which the data region R1 is stored.

### Reference Signs List

1... X-ray inspection apparatus, 5... Conveying unit, 6... X-ray irradiation unit, 7... X-ray detection unit, 7A... Detecting element, 8...Display operation unit, 9... Article detection unit, 10...First control unit, 20... Second control unit, A1...First region, A2... Second region, D1, D1A...First data, D2, D2A... Second data, D3, D3A...Inspection data, G, G1 to G3...Article, R1... Data region (first region), R2...Header region (second region)

## Claims

1. An X-ray inspection apparatus (1) comprising:
a conveying unit (5) configured to convey an article (G);
an article detection unit (9) configured to detect the article (G) conveyed by the conveying unit (5);
an X-ray irradiation unit (6) configured to irradiate the article (G) with X-rays;
an X-ray detection unit (7) configured to detect the X-rays;
a first control unit (10) configured to generate first data (D1) used to generate an X-ray inspection image based on a detection result of the X-rays detected by the X-ray detection unit (7); and
a second control unit (20) configured to control the conveying unit (5) and the X-ray irradiation unit (6) and determine based on the X-ray inspection image whether the article (G) is defective or not, wherein
the first control unit (10) acquires, in addition to the first data (D1), second data (D2) that is information related to a detection result by the article detection unit (9) and generates inspection data (D3) including a first region (R1) in which the first data (D1) is stored and a second region (R2) in which the second data (D2) is stored, and
the second control unit (20) generates the X-ray inspection image based on the inspection data (D3) generated by the first control unit (10).

2. The X-ray inspection apparatus (1) according to claim 1, wherein
the first control unit (10) acquires the second data (D2) by receiving the second data (D2) transmitted from the article detection unit (9).

3. The X-ray inspection apparatus (1) according to claim 1 or 2, wherein
the second control unit (20) generates the X-ray inspection image based on the first data (D1) when the second data (D2) of the inspection data (D3) transmitted from the first control unit (10) is information indicating that there is a detection by the article detection unit (9).

4. The X-ray inspection apparatus (1) according to any one of claims 1 to 3, wherein
the article detection unit (9) is configured to detect presence of the article (G) in each of a plurality of regions divided in a width direction orthogonal to a conveying direction of the article (G).
